**Europäisches Patentamt**

**European Patent Office**

**Office européen des brevets**

(19)

(11) Veröffentlichungsnummer : **0 344 401 B1**

(12)

# EUROPÄISCHE PATENTSCHRIFT

(45) Veröffentlichungstag der Patentschrift :
**29.07.92 Patentblatt 92/31**

(51) Int. Cl.⁵ : **E05F 15/16**

(21) Anmeldenummer : **89101401.1**

(22) Anmeldetag : **27.01.89**

(54) **Sicherheitsvorrichtung für eine automatisch bewegte Fensterscheibe eines Kraftfahrzeugs.**

(30) Priorität : **31.05.88 DE 3818456**

(43) Veröffentlichungstag der Anmeldung :
**06.12.89 Patentblatt 89/49**

(45) Bekanntmachung des Hinweises auf die
Patenterteilung :
**29.07.92 Patentblatt 92/31**

(84) Benannte Vertragsstaaten :
**DE FR GB IT SE**

(56) Entgegenhaltungen :
**EP-A- 0 174 837**
**DE-A- 2 917 797**
**DE-A- 3 724 085**
**DE-A- 3 724 942**
**FR-A- 2 394 662**

(73) Patentinhaber : **kabelmetal electro GmbH**
**Kabelkamp 20 Postfach 260**
**W-3000 Hannover 1 (DE)**

(72) Erfinder : **Richter, Siegfried, Ing.(grad.)**
**Weinberg 10**
**W-8501 Eckental-Eckenhaid (DE)**
Erfinder : **Schauer, Friedrich, Dipl.-Ing.**
**Forstweg 10**
**W-8501 Heroldsberg (DE)**
Erfinder : **Bauernfeind, Peter, Dipl.-Ing.**
**Villacher Strasse 9**
**W-8500 Nürnberg 80 (DE)**

EP 0 344 401 B1

## Beschreibung

Die Erfindung betrifft eine Sicherheitsvorrichtung für eine automatisch bewegte Fensterscheibe eines Kraftfahrzeugs, zu deren Bestätigung im Kraftfahrzeug ein in der Drehrichtung umkehrbarer Elektromotor angeordnet ist, bei welcher über der Fensterscheibe in einem am weitesten nach unten vorspringenden Teil einer Dichtung ein über die ganze obere Länge der Fensterscheibe wirksamer Sensor angebracht ist und bei welcher bei einer Belastung des Sensors durch einen von der aufwärts bewegten Fensterscheibe an denselben angedrückten Gegenstand die Drehrichtung des Elektromotors durch ein vom Sensor abgegebenes elektrisches Signal umkehrbar ist (DE-OS 37 24 085).

Viele Personenkraftwagen, insbesondere die der gehobenen Klasse, sind heute mit elektrischen Fensterhebern ausgerüstet. In der Regel können die Fensterscheiben der Vordertüren durch Knopfdruck elektrisch geöffnet und geschlossen werden. Es besteht dabei die Gefahr, daß Gegenstände durch eine automatisch aufwärtsbewegte Fensterscheibe eingeklemmt werden, die sich aus irgend einem Grunde zwischen Fensterscheibe und Türrahmen bzw. anderen Teilen der Karosserie des Kraftwagens befinden. Wenn es sich dabei um eine Hand handelt, kann der von der Fensterscheibe ausgeübte Druck schmerzhaft sein. Schlimmer ist es, wenn der Druck auf die Halspartie eines Menschen oder eines Tieres ausgeübt wird, da derselbe durchaus tödlich sein kann. So etwas kann eintreten, wenn im Antriebssystem der Fensterscheibe ein Fehler auftritt oder wenn der Hebemechanismus durch Unkundige, beispielsweise durch Kinder, falsch bedient wird.

Durch die Sicherheitsvorrichtung nach der eingangs erwähnten DE-OS 37 24 085 soll die geschilderte Gefahr bei automatisch bewegten Fensterscheiben von Kraftfahrzeugen vermieden werden. Es wird dazu in einer Dichtung des Türrahmens über der Fensterscheibe ein flexibles elektrisches Kontaktband eingelegt. Das Kontaktband besteht aus zwei im Ruhezustand voneinander getrennten Teilen, die unter elastischer Verformung durch einen von der Fensterscheibe bewegten Gegenstand zur gegenseitigen Anlage gebracht werden können. Durch den dann geschlossenen Stromkreis wird ein Relais betätigt, durch welches die Drehrichtung des Motors umgekehrt wird, der die Fensterscheibe bewegt.

Der Erfindung liegt die Aufgabe zugrunde, die Funktionssicherheit der eingangs beschriebenen Sicherheitsvorrichtung zu erhöhen.

Diese Aufgabe wird gemäß der Erfindung dadurch gelöst, daß der Sensor als Piezokabel ausgebildet ist, das zwischen zwei Festpunkten eingespannt ist und bei Belastung durch den Gegenstand einen Spannungsimpuls als elektrisches Signal abgibt.

Mit dieser Sicherheitsvorrichtung wird die Aufwärtsbewegung einer durch einen Elektromotor bewegten Fensterscheibe sofort gestoppt und in eine Abwärtsbewegung umgekehrt, wenn ein zwischen Fensterscheibe und Karosserie vorhandener Gegenstand gegen das Piezokabel gedrückt wird. Es gibt bei einer einstellbaren, maximal zulässigen Druckbelastung einen elektrischen Spannungsimpuls ab, durch,welchen die Drehrichtung des Elektromotors und damit die Bewegungsrichtung der Fensterscheibe umgekehrt werden. Es kann also kein Gegenstand zwischen Fensterscheibe und Karosserie fest eingeklemmt werden. Eine für Lebewesen tödliche Belastung kann nicht mehr auftreten.

Piezokabel sind beispielsweise aus der DE-Z "Markt und Technik", Nr. 14 vom 4. April 1986, Seiten 44 und 48 bekannt. Sie bestehen beispielsweise aus einem metallischen Innenleiter, einer denselben umgebenden Isolierung aus einem speziellen Material und einem über der Isolierung liegenden Außenleiter. Die Isolierung besteht aus einem Polymer, beispielsweise aus Polyvinylidenfluorid, das einen piezoelektrischen Effekt aufweist. Ein solches Piezokabel erzeugt bei Zug-, Druck oder Torsionsbelastung einen elektrischen Spannungsimpuls, der zwischen Innenleiter und Außenleiter abgegriffen werden kann.

Ein Ausführungsbeispiel des Erfindungsgegenstandes ist in den Zeichnungen dargestellt.

Es zeigen:

Fig. 1 einen Ausschnitt einer Tür eines Kraftfahrzeugs.

Fig. 2 einen Schnitt durch Fig. 1 längs der Linie II - II in vergrößerter Darstellung.

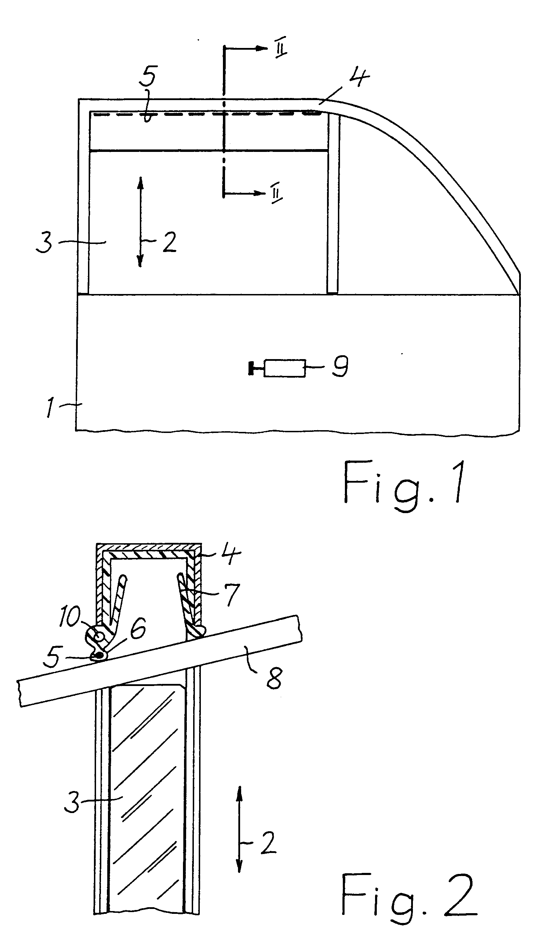

In Fig. 1 ist eine Autotür 1 mit einer in Richtung des Doppelpfeils 2 verstellbaren Fensterscheibe 3 - im folgenden "Scheibe 3" genannt - dargestellt, die innerhalb des Türrahmens 4 geführt ist. Im oberen Bereich des Türrahmens 4 ist über die ganze Länge der Scheibe 3 ein Piezokabel 5 angeordnet, das bei mechanischer Belastung einen elektrischen Spannungsimpuls abgibt. Das Piezokabel 5 ist am Türrahmen 4 in der am weitesten nach unten vorragenden Dichtlippe 6 angebracht, die zu einer im Türrahmen 4 angeordneten Dichtung 7 gehört.

Die Vorrichtung nach der Erfindung arbeitet beispielsweise wie folgt:

Ein Gegenstand 8, der sich zwischen Türrahmen 4 und Scheibe 3 befindet, wird durch die sich aufwärts bewegende, von einem in der Tür 1 angeordneten und in Fig. 1 schematisch angedeuteten Elektromotor 9 angetriebene Scheibe 3 gegen das in der Dichtlippe 6 befindliche Piezokabel 5 gedrückt. Es ist über eine elektronische Verstärkerschaltung mit dem Elektromotor 9 verbunden. Durch den vom Gegenstand 8 ausgeübten Druck erzeugt das Piezokabel 5 einen elektrischen Spannungsimpuls, durch welchen die Drehrichtung des Elektromotors 9 sofort umgedreht wird, so daß die Scheibe 3 abwärts bewegt wird. Der Gegenstand 8 kann also nicht fest eingeklemmt werden.

Das Piezokabel 5 ist in der Dichtlippe 6 in gespannter Lage angebracht, wobei es mit beiden Enden zwischen zwei Festpunkten festgelegt ist. Das Piezokabel 5 wird daher durch den angedrückten Gegenstand 8 auch und insbesondere auf Zug beansprucht. Es wird durch das so angeordnete Piezokabel 5 durch den von der Scheibe 3 bewegten Gegenstand 8 also mit großer Sicherheit ein elektrischer Spannungsimpuls zur Beeinflussung des Elektromotors 9 erzeugt.

Die Sicherheitsvorrichtung ist bei allen möglichen Formen von Scheiben 3 einsetzbar, auch wenn dieselben im Türrahmen 4 nicht innen sondern außen geführt sind. Das Piezokabel 5 muß nur immer so angeordnet werden, daß der Gegenstand 8 durch die Scheibe 3 dagegen gedrückt wird. Es dürfen also weder am Türrahmen 4 noch an anderen Teilen der Karosserie Teile vorhanden sein, die weiter als die Dichtlippe 6 mit dem Piezokabel 5 nach unten ragen.

Um sicherzustellen, daß nicht jeder vom Piezokabel 5 erzeugte Spannungsimpuls zur Beeinflussung des Elektromotors 9 führt, wird zweckmäßig zwischen dem Piezokabel 5 und dem Elektromotor 9 eine Auswertelektronik eingeschaltet. Diese umfaßt mindestens einen die Spannungsimpulse des Piezokabels 5 verstärkenden Impedanzwandler und einen Schwellwertgeber, durch welche Dauer und Größe der auf das Piezokabel 5 einwirkenden Kraft erfaßt werden. Kleinere Belastungen des Piezokabels 5, also ein versehentliches Berühren desselben, führen nicht zur Beeinflussung des Elektromotors 9.

Zu der Auswertelektronik kann außerdem ein Verstärker gehören, durch welchen die vom Piezokabel 5 gelieferten Spannungsimpulse gegebenenfalls verstärkt werden. Die Spannungsimpulse werden außerdem zweckmäßig mittels eines aktiven Tiefpasses gefiltert. Dadurch werden Fehlimpulse unterdrückt, wie sie beispielsweise durch Vibrationen oder das Zuschlagen einer Tür des Kraftfahrzeugs entstehen können. Erst beim Überschreiten eines vorgebbaren Spannungswerts innerhalb der Auswertelektronik entsteht ein Impuls, durch welchen der Elektromotor 9 in seiner Drehrichtung umgekehrt wird.

## Patentansprüche

1. Sicherheitsvorrichtung für eine automatisch bewegte Fensterscheibe (3) eines Kraftfahrzeugs, zu deren Betätigung im Kraftfahrzeug ein in der Drehrichtung umkehrbarer Elektromotor (9) angeordnet ist, bei welcher über der Fensterscheibe (3) in einem am weitesten nach unten vorspringenden Teil einer Dichtung ein über die ganze obere Länge der Fensterscheibe (3) wirksamer Sensor angebracht ist und bei welcher bei einer Belastung des Sensors durch einen von der aufwärts bewegten Fensterscheibe (3) an denselben angedrückten Gegenstand (8) die Drehrichtung des Elektromotors (9) durch ein vom Sensor abgegebenes elektrisches Signal umkehrbar ist, dadurch gekennzeichnet, daß der Sensor als Piezokabel (5) ausgebildet ist, das zwischen zwei Festpunkten eingespannt ist und bei Belastung durch den Gegenstand (8) einen Spannungsimpuls als elektrisches Signal abgibt.

## Claims

1. Safety device for an automatically moved window (3) of a motor vehicle, for the activation of which an electric motor (9) whose direction of revolution can be reversed is arranged in the motor vehicle, in which device a sensor which is effective over the entire upper length of the window (3) is attached over the window (3) in a part of a seal projecting furthest downwards, and in which, in the event of the sensor being stressed by an object (8) pressed against it by the window (3) which is being moved upwards, the direction of revolution of the electric motor (9) can be reversed by an electrical signal issued by the sensor, characterised in that the sensor is constructed as a piezoelectric cable (5) which is clamped between two fixed points and issues a voltage pulse as an electrical signal when it is stressed by the object (8).

## Revendications

1. Dispositif de sécurité pour une vitre de fenêtre (3) mobile automatiquement d'un véhicule automobile, le véhicule comportant un moteur électrique (9) à sens de rotation réversible pour la manoeuvre de la vitre (3), dans lequel un détecteur actif est disposé ai-dessus de toute la longueur supérieure de la vitre (3) dans la partie faisant saillie le plus vers le bas d'une étanchéité et dans lequel pour une sollicitation du détecteur causé par

3

un objet (8) poussé contre lui par la vitre (3) manoeuvrée vers le haut, le sens de rotation du moteur électrique (8) est changé de sens sous l'effet d'un signal électrique fourni par le détecteur, <u>caractérisé en ce que</u> le détecteur est constitué d'un câble piézoélectrique (5) qui est tendu entre deux points fixes et qui lorsqu'il est sollicité par l'objet (8) fournit un signal électrique d'impulsion de tension.

EP 0 344 401 B1

Fig.1

Fig.2

5